# EUROPEAN PATENT SPECIFICATION

(11) **EP 4 624 225 B1**
(45) Date of publication and mention of the grant of the patent: **29.07.2026**
(21) Application number: 24167870.5
(22) Date of filing: 29.03.2024
(51) Int. Cl.: B60L 5/00, B60L 13/03, H02K 41/03, B65G 54/02, H01F 38/14, H02K 11/00, H02K 21/02, H02K 41/02, H02J 50/05, H02P 25/06

(54) **LINEAR MOTOR WITH CAPACITIVE POWER TRANSFER**
LINEARMOTOR MIT KAPAZITIVER LEISTUNGSÜBERTRAGUNG
MOTEUR LINÉAIRE À TRANSFERT DE PUISSANCE CAPACITIF

(43) Date of publication of application: 01.10.2025
(73) Proprietor: ABB Schweiz AG, 5400 Baden (CH)
(72) Inventor: Reinthaler, Michael, 5223 Pfaffstätt (AT)
(74) Representative: Weiss Patentanwalts GmbH

(56) References cited:
- EP-A1- 2 793 356
- CN-C- 100 592 609
- US-A1- 2005 225 188
- US-A1- 2017 256 106
- US-A1- 2021 384 765
- US-B2- 6 580 185

## Description

The present invention pertains to a linear motor having a stator and at least one shuttle movable along the stator in a direction of movement, wherein drive magnets are arranged along the stator in direction of movement and a number of drive coils are arranged on the at least one shuttle or drive magnets are arranged on the shuttle and a number of drive coils are arranged along the stator in direction of movement, wherein the drive magnets and the number of drive coils face each other and are separated in a normal direction by a linear motor air gap with a motor air gap distance in a normal direction, wherein the linear motor air gap extends in direction of movement and in a transverse direction that is normal on the direction of movement and the normal direction, wherein a capacitive power transfer arrangement is provided in the linear motor, the capacitive power transfer arrangement comprising at least one primary electrode arranged on the stator and extending in direction of movement and further comprising a secondary electrode arranged on the shuttle, the at least one secondary electrode facing the primary electrode and being arranged in normal direction opposite the primary electrode, wherein the primary electrode and the secondary electrode are separated by a power transfer air gap with a power transfer air gap distance in normal direction, wherein the power transfer air gap extends in direction of movement and in transverse direction, and wherein the at least one primary electrode and the at least one secondary electrode form a power transfer capacitor with the power transfer air gap as dielectric for capacitive power transfer for transferring electrical energy from the stator to the shuttle.

Long stator linear motors (LLM) are well-known transport devices. In an LLM, drive coils are arranged stationary along a stator that may extend along a long track. On a moving shuttle of the LLM, drive magnets are arranged. In operation of the LLM, the drive coils are energized by applying a drive coil voltage to the drive coils for generating an electromagnetic drive field. This electromagnetic drive field interacts with the magnetic field of the drive magnets on the shuttle for producing a propulsion force acting on the shuttle. Said propulsion forces moves the shuttle along the stator of the LLM. Examples of LLM are given in WO 2013/143783 A1, US 6,876,107 B2 or US 2013/0074724 A1. In addition to a propulsion force, a force transverse to the direction of movement may also be produced by the interaction of the electromagnetic drive field and the magnetic field of the drive magnets. Such a transverse force may be used to guide a shuttle in an electromagnetic switch of the track in the desired direction. This known from EP 3109998 B1, for example. CN 100 592 609 C discloses a linear motor having a stator and at least one shuttle movable along the stator in a direction of movement, wherein drive magnets are arranged on the shuttle and a number of drive coils are arranged along the stator in direction of movement wherein the drive magnets and the number of drive coils face each other and are separated in a normal direction by a motor air gap with a motor air gap distance in normal direction, wherein the motor air gap extends in direction of movement and in a transverse direction that is normal on the direction of movement and the normal direction.

One of the advantages of an LLM is that the shuttle when using permanent magnets as drive magnets does not need electric energy for producing the magnetic field. A major disadvantage is however the rather complex stator with the drive coils that need to be controlled individually. Apart from that, the drive coils produce quite some heat that is conducted into the stator which may require active cooling. Such active cooling increases the complexity of the stator further. Last but not least, for efficient operation of the LLM, a small air gap between the drive coils and the drive magnets is required. But the smaller the air gap the higher the risk that parts of the shuttle get into contact with parts of the stator. Thermal expansion of the stator may even aggravate this problem. Mechanical contact between stator and shuttle is highly undesired because this can cause severe damage to the stator and/or the shuttle and can even lead to shutdown of the LLM.

At least some of these problems do not occur in a different linear motor design called short stator linear motor (SLM). In a SLM, the drive coils are arranged on the shuttle and the drive magnets in the stator. The stator design is therefore significantly simplified a copared to an LLM. The SLM motor design, however, requires electrical energy on the shuttle for driving the drive coils. Therefore, in a SLM, transfer of electrical energy to the moving shuttle is required. This can be done using wiper contacts. Wiper contacts are however prone to failure and require regular maintenance. Therefore, contactless power transfer is preferred. Contactless power transfer can be inductive or capacitive.

There are however also LLM applications in which electric power transfer to the shuttle is required. This can be the case, for example, when the shuttle comprises actuators, like grippers, hydraulic or pneumatic pumps, that need electric energization for their operation. Also in such LLM applications, contactless power transfer is preferred and contactless power transfer can be inductive or capacitive. A shuttle of a SLM could also comprise electric components that need to be energized with electric energy.

Inductive or capacitive power transfer is used, for example, for charging applications, like charging a mobile device or an electrified car. An example for capacitive charging is given in Regensburger B., et al., "High-Performance Capacitive Wireless Power Transfer System for Electric Vehicle Charging with Enhanced Coupling Plate Design", Proceedings Energy Conversion Congress and Exposition (ECCE), 2018 IEEE, p.2472-2477*.*

It is also known, that an inductive or conductive power transfer arrangement can simultaneously be used for data transmission to or from the shuttle. Such data transmission could be required in an SLM in order to send control commands for energizing the drive coils on the shuttle, or in an LLM to send control commands for an actuator on the shuttle. The shuttle of an LLM or SLM could send measuring data or process parameters or data to the motor control unit. Therefore, bidirectional data transfer using an inductive or conductive power transfer arrangement is highly advantageous transport applications using linear motors. An example for this is given in Shaoge Zang, et al., "Capacitive Power Transfer System With Integrated Wide Bandwidth Communication", IEEE Transactions on Power Electronics, Vol. 37, Issue 8, August 2022, p.8805 - 8810*.*

WO 2020/188430 A1 shows an inductive power transfer in a LLM transport system. This inductive power transfer could however also be applied in a SLM. The contactless inductive power transfer exploits the principle of magnetic induction to transfer electric energy to the shuttle by means of inductively coupled transmitting and receiving coils. A major disadvantage of an inductive power transfer is the need of transmitting and receiving coils along the track on which power transfer is needed. These coils need space and will generate significant heat during operation with similar disadvantages as mentioned above.

US 2005/0225188 A1 describes inductive power and data transmission in a rotary motor and US 2021/0384765 A1 describes inductive data transmission in a LLM. Also in these examples, coils are required on the transmitting and on the receiving side with the already mentioned associated disadvantages.

Capacitive power transfer is also known for linear motors. EP 2 793 356 B1 and EP 2 903 407 A1 describe capacitive power transfer for a SLM. To this end a first electrode is arranged on the shuttle and a second electrode, separated by an air gap from the first electrode, on the stator. The two electrodes form a capacitor with the air in between as dielectric that is used for power transfer. In EP 2 793 356 B1 the drive coil is arranged behind the electrode for power transfer. This increases the air gap for the electromagnetic drive field and, hence, decreases the possible propulsion force. For higher propulsion forces, significantly higher coil voltages were required. In EP 2 903 407 A1, the drive coils are offset 90° from the electrodes for power transfer which allow optimum air gaps between drive coils and drive magnets as well as between the two electrodes for capacitive power transfer.

But in both cases EP 2 793 356 B1 and EP 2 903 407 A1 the SLM has just a very simply track in the form a short straight track. Such a simple track is usually sufficient for a drive axis or a working machine as in EP 2 793 356 B1 and EP 2 903 407 A1. In a transport device, however, the track along which the shuttle may move usually has a much more complex shape with straight sections, bends (of different curvatures), inclinations and often also with switches connecting different tracks of the transport system. For such tracks, especially for bends, the design of the capacitive power transfer as described in EP 2 903 407 A1 is not suitable. With a 90° offset between the drive coils and the electrodes for power transfer, either the air gap between the drive coils and the drive magnets or the air gap between the electrodes for power transfer changes in a bend of the motor track due to the curvature in the bend. So, either the capacitive power transfer or the drive of the shuttle would suffer in a bend of the motor track and would not operate efficiently. Compensation of these effects would require higher electrical energies for the capacitive power transfer or the drive which would increase losses and heat generation.

It is an object of the present invention to provide a linear motor (LLM or SLM) with improved capacitive power transfer from the stator to the shuttle of the motor. This object is achieved with a linear motor according to claim 1 and claim 4.

By arranging the primary and secondary electrodes such that the power transfer air gap in between is oriented to be parallel to the motor air gap it is ensured that the air gaps are not affected when the stator is bent in one direction, or that the air gaps are equally affected when the stator is bent in another direction. This allows a linear motor with complex geometry, especially with bended sections, without negative effects on the efficiency of the power transfer (and/or the capacitive data communication).

The power transfer capacitor formed by a primary electrode and a secondary electrode coupled thereto may additionally be used for capacitive data communication. Or more then one capacitor is provided so that at least one capacitor is used for power transfer and another one for data communication.

When more than one power transfer capacitor is provided, the electric energy that can be transferred to shuttle may be increased.

The present invention is described below in greater detail with reference to Figs.1 to 5 which show schematic and non-limiting advantageous embodiments of the disclosure by way of example. The invention is defined in the appended claims. In the drawings:
Fig.1 shows a closed short-stator linear motor stator track with inventive capacitive power transfer,
Fig.2 a cross section through the stator and a shuttle on the stator,
Fig.3 a section of a long-stator linear motor stator track with inventive capacitive power transfer and
Fig.4 und Fig.5 different concepts of capacitive power transfer.

In the following linear motor refers to both motor concept, ie. to long-stator linear motors (LLM ) and to short-stator liner motors (SLM).

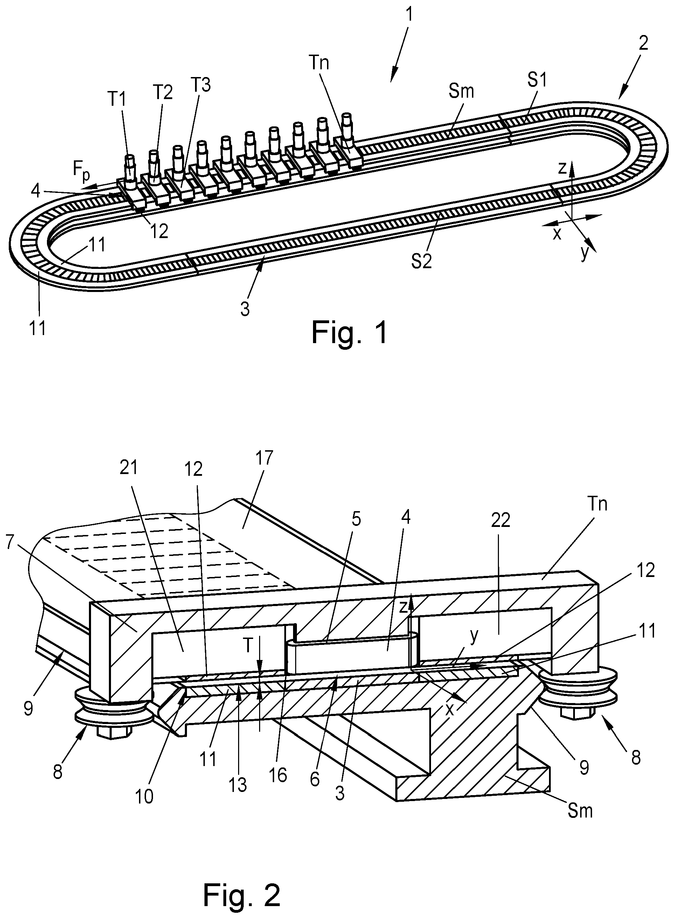

Fig.1 shows a short stator linear motor (SLM) as example of a linear motor 1. The linear motor 1 has a stator 2 and at least one shuttle Tn that is movable along the stator 2. "n" is used as index to be able to distinguish different shuttles, if need be, whereas Tn is used in the following when no specific shuttle is addressed. The stator 2 is stationary and the shuttle Tn moves with respect to the stator 2.

The stator 2 of the linear motor 1 may have any shape and geometry. The stator 2 may comprise straight track sections and bend track sections, possibly also bends in different directions. In the example of Fig.1, the stator 2 is designed as closed circuit extending 2-dimensionally in plane with two 180° bends connected by straight track sections. It is however not necessary that the stator 2 extends in a plane but could also extend 3-dimensionally which would require bends in different directions. The stator 2 may also comprise a number of stator segments Sm. "m" is used as index to be able to distinguish different stator segments, if need be, whereas Sm is used in the following when no specific stator segment is addressed. Each stator segment Sm may have a given shape and geometry, like a bend with a certain curvature or bend length, a straight line, a switch etc. Stator segments Sm are arranged next to each other in direction of movement x of a shuttle Tn along the stator 2 in order to form the desired stator 2 for a given application.

The track of the stator 2 defines a direction of movement x. A shuttle Tn, when driven, may move along the stator 2 in the direction of movement x.

For driving a shuttle Tn of a SLM, drive magnets 3, usually permanent magnets or electromagnets, are arranged along the stator 2 (as in Fig.1 and Fig.2). A number of drive coils 4 are arranged on the shuttle Tn. Usually more than one drive coil 4 is provided. When energized with a drive coil voltage, the number of drive coils 4 produce an electromagnetic drive field. This electromagnetic drive field interacts with the magnetic field of the drive magnets 3 in the region of the shuttle Tn for producing a propulsion force F_{P} that moves the shuttle Tn in the desired direction of movement x along the stator 2.

In well-known manner, by controlling the propulsion force F_{P} the kinematic quantities (position, speed, acceleration, jerk) of the movement of the shuttle Tn along the stator 2 may be controlled. It is also possible to control the movement of each shuttle Tn on the stator 2 independently. The propulsion force F_{P} is controlled by controlling the energization of the drive coils 4.

Fig.2 shows a cross section through a shuttle Tn of a SLM on the stator 2. In this embodiment, the number of drive coils 4 of the shuttle Tn are arranged on a laminated core 5 made of magnetically highly conductive material, like an iron-based material. Each one of the number of drive coils 4 is arranged on a tooth of the laminated core 5, for example. The number of drive coils 4 and the drive magnets 3 on the stator 2 face each other. The number of drive coils 4 is arranged opposite (in direction z) to the drive magnets 3 on the stator with a motor air gap 6 in between. The motor air gap 6 is the air space between the drive coils 4 and the drive magnets 3.

The motor air gap 6 extends two-dimensionally in direction of movement x in a transverse direction y, whereas the transverse direction y is basically defined by the surface of the stator 2 facing the shuttle Tn. The direction of movement x and the transverse direction y span a movement plane of the SLM along which the shuttle Tn is moved. In a direction z, normal on the direction of movement x and transverse direction y, the motor air gap 6 has an air gap distance L. This gap distance L is decisive for the efficiency of the linear motor 1. For an efficient operation of the SLM, the air gap distance L is to be as small as possible, as this increases the electromagnetic field strength in the motor air gap 6..

In Fig.2 it is also shown, that the shuttle Tn comprises a shuttle body 7, onto which the drive coils 4, and possibly also the laminated core 5, are arranged. The shuttle body 7 is usually made of a magnetically non-conductive material, or at least a material having a very low magnetically conductance. It is further shown, that the drive coils 4 can be covered by a drive coil cover 16 for protecting the drive coils 4. Also the drive magnets 3 on the stator 2 are usually covered by a magnet cover 17 for protecting the drive magnets 3.

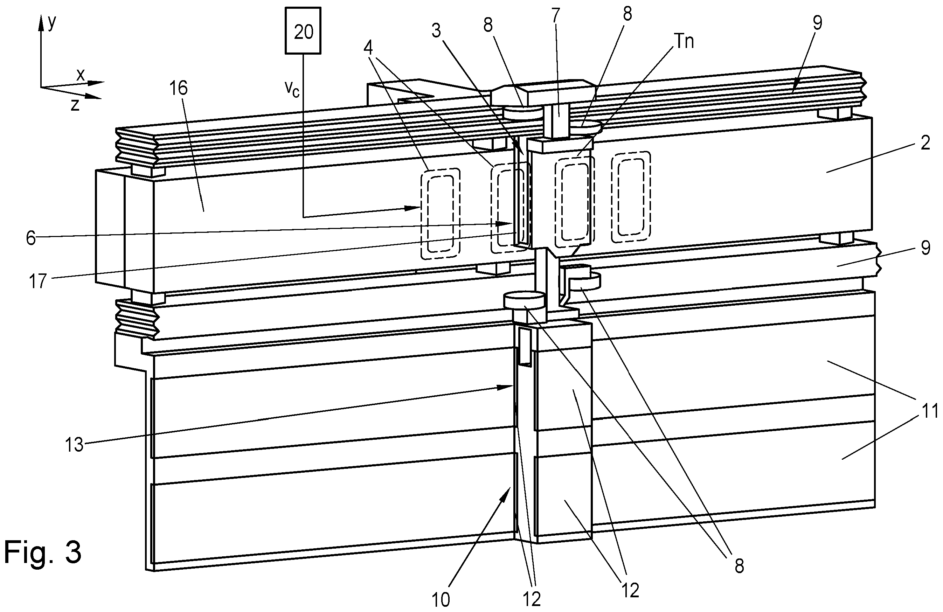

In Fig.3 a section of the track of linear motor 1 in the form of an LLM is shown. In case of an LLM, the drive coils 4 are arranged on the stator 2 in direction of movement x next to each other. The drive magnets 3 are arranged on the shuttle Tn and opposite (in direction z) the drive coils 4. In the embodiment of Fig.3, the drive coils 4 are covered by a drive coil cover 16 and the drive magnets 3 are covered by a magnet cover 17. As in case of a SLM, the drive coils 4 in the region of the shuttle Tn are energized with a drive coil voltage v_{c} for producing an electromagnetic field that interacts with the magnetic field of the drive magnets 3 for producing a propulsive force acting on the shuttle Tn for moving the shuttle Tn along the stator 2.

Although not clearly seen in Fig.3, also in case of an LLM, a motor air gap 6 is provided between the drive coils 4 (facing the motor air gap 6) and the drive magnets 3 (facing the motor air gap 6) as described above with respect to the SLM of Fig.2. The motor air gap 6 has an air gap distance L in direction z.

In the embodiment of Fig.3, there are two primary electrodes 11 arranged on the stator 2 with both primary electrodes 11 on one side (as seen in transverse direction) of the stator 2. Therefore, also the associated secondary electrodes 12 on the shuttle Tn are on one side of the drive magnets 3. It would however also be possible to provide at least one primary electrode 11 on each side (as seen in transverse direction) of the on the stator 2. In this case, also at least one associated secondary electrode 12 on the shuttle Tn were on each side of the drive magnets 3.

Usually, the shuttle Tn comprises also guide means 8 used for guiding the shuttle Tn along the stator 2. To this end, also the stator 2 comprises guide means 9 and the shuttle guide means 8 interact with the stator guide means 9 for guiding the shuttle Tn. In the embodiments of the linear motor 1 of Fig.2 and Fig.3, the shuttle guide means 8 are rollers that are rotatably arranged on the shuttle Tn, specifically on the shuttle body 7, and the stator guide means 9 is formed by guide rails on which the rollers roll during operation of the SLM.

In Fig.3 it is also indicated that the linear motor 1 is also provided with a motor control unit 20 that controls energization of the drive coils 4 with the drive coil voltage v_{c} in order to move the shuttle Tn in the desired way (e.g. speed, acceleration). Although obvious and well-known, it is to mention that the drive coil voltages v_{c} of different drive coils 4 are not necessarily equal, but are usually different. The motor control unit 20 is usually a microprocessor-based hardware on which control software is run.

For providing the shuttle Tn of the linear motor 1 with electric energy, for example required for energizing the drive coils 4 and for producing the electromagnetic drive field (SLM) or required for energizing electric components on the shuttle Tn (LLM or SLM), the linear motor 1 is provided with a capacitive power transfer (CPT) arrangement 10 for transferring electrical energy from the stator 2 to the shuttle Tn.

The CPT arrangement 10 (as shown in Fig.2 and 3) comprises at least one primary electrode 11 arranged on at least a section of the stator 2. The primary electrode 11 extends in direction of movement x along the stator 2 in direction of movement x. The length of the primary electrode 11 in direction of movement x is preferably longer than the length of the shuttle Tn in direction of movement x, usually much longer than the length of the shuttle Tn in direction of movement x. Preferably, the primary electrode 11 extends along the complete length of the stator 2 of the linear motor. The primary electrode 11 is at least arranged in a section of the stator 2 on which electric power transfer to the shuttle Tn is required. On the shuttle Tn, at least one secondary electrode 12 is arranged. The primary electrode 11 and the secondary electrode 12 are arranged opposite to each other (in direction z) and face each other, so that a power transfer air gap 13 is formed between the primary electrode 11 and the secondary electrode 12. Like, the motor air gap 6, also the power transfer air gap 13 is the air space between the at least one primary electrode 11 and the opposite secondary electrode 12 and extends two-dimensionally in direction of movement x and transverse direction y. In direction z, the power transfer air gap 13 has an air gap distance T (only shown in Fig.2). For efficient power transfer, the air gap distance T of the power transfer air gap 13 is to be as small as possible in normal direction z. Preferably, but not necessarily, the air gap distance L of the motor air gap 6 and the air gap distance T of the power transfer air gap 13 are equal.

According to the invention, the motor air gap 6 and the power transfer air gap 13 are provided next to each other in transverse direction y, that is normal to the direction of movement x of the shuttle Tn along the stator 2 and normal to the normal direction z in which direction the motor air gap distance L and the power transfer air gap distance T are given. The motor air gap 6 and the power transfer air gap 13 are separated and hence do not overlap and are parallel to each other.

"parallel" means that the motor air gap 6 and the power transfer air gap 13 are at least line parallel in a cross section normal to the direction of movement x, ie. in a y-z plane (as shown in Fig.2 for example). On a straight section of the stator 2, the whole motor air gap 6 and power transfer air gap 13 extending also in direction of movement x would be parallel. On a bend section of the stator 2, the direction of movement x is of course the tangent on the curvature of the bend. In this case the motor air gap 6 and the power transfer air gap 13 vary in direction of movement x because of the bend and the motor air gap 6 and the power transfer air gap 13 are parallel in each cross section normal to the direction of movement x.

The advantage of the inventive arrangement of the primary electrode 11 and the secondary electrode 12 next to the short stator motor air gap 6 in transverse direction y is that bending the stator 2 around the normal direction z or around the direction of movement x does not affect the motor air gap 6 and the power transfer air gap 13. The motor air gap distance L and the power transfer air gap distance T would remain unchanged when the stator 2 were bend around the normal direction z (as in Fig.1) or around the direction of movement x. As the air gaps 6, 13 are not affected, also the motor drive and the power transfer are not affected.

When the stator 2 were bent around the transverse direction y, both air gaps 6, 13 were affect because the distance between the shuttle Tn and the stator 2 would change due to the curvature of the bend and due to the length of the shuttle Tn in direction of movement x. But air gaps 6, 13 would be affected equally which simplified compensation of a change in the air gap 6, 13 in order to avoid that the generation of the propulsion forces Fₚ or the power transfer is negatively affected.

In case of a bend of the stator 2 around the transverse direction y the guide of the shuttle Tn (shuttle guide means 8 and/or stator guide means 9) could be adapted in the region of the bend so that the resulting average air gap distance L, T when the shuttle Tn travels along the bend is equal to the air gap distance L, T on a straight section of the stator 2. This would compensate the effects of the changed air gaps 6, 13 on the drive or power transfer of a shuttle Tn when the shuttle Tn travels through such a bend.

A bend of the stator 2 around the transverse direction y could however advantageously be used for implementing a switch. For a switch, the shuttle Tn needs drive coils 4 (SLM) or drive magnets 3 (LLM) on both sides in normal direction z and a stator 2 on both sides in normal direction z of the shuttle Tn. The shuttle Tn would be moved between two stators 2. This is described for an LLM in EP 3 109 998 B1, which LLM could easily be adapted to also include a CPT arrangement 10 (the embodiment of Fig.3 show secondary electrodes on both sides in normal direction z). Such a switch could however also be implemented with a SLM as shown in Fig.2. To this end, the shuttle Tn were basically to be mirrored around the transverse direction y so that it comprised drive coils 4 and at least one secondary electrode 12 on both sides in normal direction z. On both sides in normal direction, a stator 2 were arranged. In the region of the switch, the stators 2 on both sides would diverge from each other in normal direction z.

The primary electrode 11 and the associated secondary electrode 12 forms a power transfer capacitor C_{PT}, with the power transfer air gap 13 as dielectric in between, that is used for capacitive power transfer for transferring electrical energy for energizing at least one of the number of drive coils 4 (SLM) or for energizing an electric component (SLM, LLM) on the shuttle Tn from the stator 2 to the shuttle Tn.

In a preferred embodiment of the inventive linear motor 1, there are provided two separate primary electrodes 11 on the stator 2 and two separate secondary electrodes 12 on the shuttle Tn. Each one of the primary electrodes 11 is coupled to one of the secondary electrodes 12 for forming a power transfer capacitor C_{PT}, with the power transfer air gap 13 as described above as dielectric in between, in each case.

In general, in capacitive power transfer, electric energy is transmitted by electric fields developing between the primary electrode 11 and secondary electrode 12 of a power transfer capacitor C_{PT}. To this end, an alternating (AC) primary voltage vₚ, provided by an AC power source 15, is applied to the primary electrode 11 causing an oscillating electric field that induces an AC secondary voltage vₛ on the secondary electrode 12 by electrostatic induction. This in turn causes an AC secondary current iₛ to flow in an electric load 18 connected to the secondary electrode 12. The electric load 18 can be a drive coil 4, an electric component or an electric energy storage.

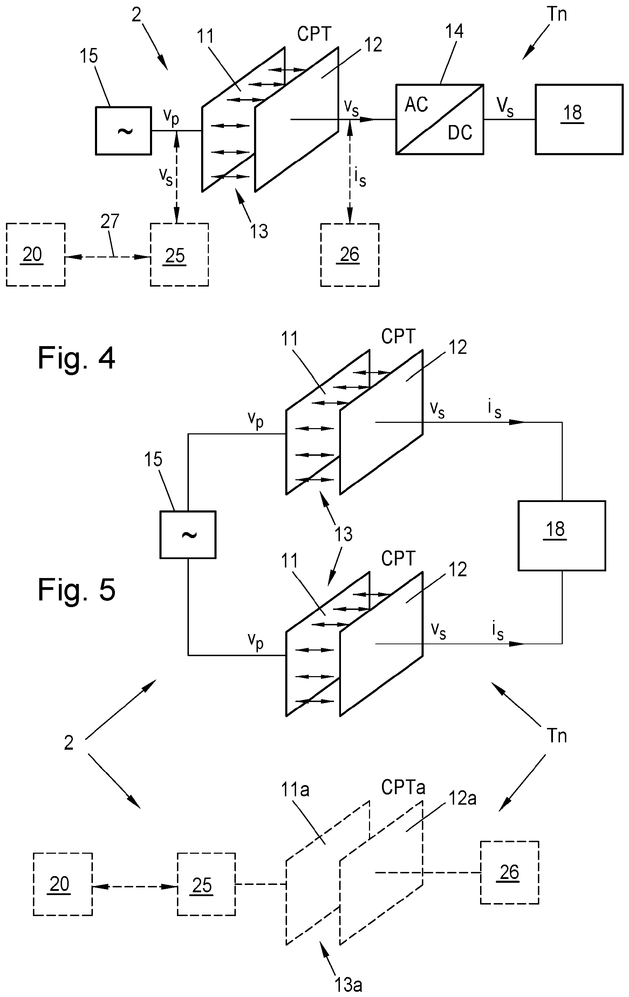

This well-known principle of capacitive power transfer is exemplarily shown in Fig.4. In the embodiment of Fig.4, an optional AC/DC-converter 14 is provided between the secondary electrode 12 and the load 18, for converting the AC secondary voltage vₛ and AC secondary current iₛ in a DC secondary voltage Vₛ and DC secondary current Iₛ.

Fig.5 shows an embodiment of a CPT arrangement 10 using two power transfer capacitors C_{PT}. The AC power source 15 applies AC primary voltages vₚ with 180° phase difference to the primary electrodes 11. The generated electric fields in the power transfer capacitors C_{PT} induce opposite phase AC secondary voltages vₛ in the secondary electrodes 12, which in turn causes a secondary AC current iₛ to flow back and forth between the secondary electrodes 12 and through the load 18 connected thereto. Between load 18 and the secondary electrodes 12 a AC/DC-converter could be provided that would provide a DC secondary voltage Vₛ and DC secondary current Iₛ to load 18.

The amount of power transferred with the capacitive power transfer arrangement 10 increases with the frequency of the AC primary voltage vₚ and the capacitance of the power transfer capacitor C_{PT}, which is inversely proportional to the distance between the primary electrode 11 and secondary electrode 12 in normal direction z. This means that, the smaller the power transfer air gap distance T, the more electric power can be transferred for a given AC primary voltage vₚ.

The capacitive power transfer could be improved if resonant power transfer were used. In this case the power transfer capacitor C_{PT} could be integrated into an electric resonant circuit in that a choke (inductance) is connected in series or parallel to the secondary electrode 12. Also, the primary electrode 11 could be connected in series or parallel to a choke (inductance). The resonant circuit can also comprise additional passive electric components, like capacitors, inductances or resistor. By tuning the choke (value of the inductance) to the power transfer capacitor C_{PT}, the resonant circuit can be operated in or close to resonance. The resonant circuit can be excited to operate in resonance by adjusting the frequency of the AC primary voltage vₚ. The choke (inductance), and optional additional electrical components, can be arranged on a circuit board 22 (only shown in Fig.2) provided on the shuttle Tn.

The transferred electric energy can also be stored in an electric energy storage 21 (only shown in Fig.2) on the shuttle Tn, like a battery of a supercapacitor.

The electric energy transferred with CPT arrangement 10 in a SLM as linear motor 1 is primarily used on the shuttle Tn for energizing the number of drive coils 4 for driving the shuttle Tn. The electric energy could however additionally be used to power any other electric component on the shuttle Tn, like an actuator, a gripper, a pump or a device for data communication, on the shuttle Tn.

The CPT arrangement 10 could additionally also be used for data communication, also for bidirectional data communication, between the shuttle Tn and the motor control unit 20. This is exemplarily indicated in Fig.4. The primary electrode 11 on the stator 2 is coupled to a first data communication unit 25. The first data communication unit 25 is connected to the motor control unit 20, via a data communication bus 27, for example. This first data communication unit 25 could superimpose an AC communication signal vₛ onto the AC primary voltage vₚ. Any possible modulation scheme, like frequency modulation or amplitude modulation, could be used with the AC communication signal vₛ for data communication. The used frequency ranges of the AC primary voltage vₚ and the AC communication signal vₛ are separated. At the secondary side, the AC communication signal vₛ, or a signal representative of the AC communication signal vₛ, is recovered (by demodulation or filtering, for example) from the AC secondary voltage vₛ by a second data communication unit 26 on the shuttle Tn. For bidirectional data communication, the communication would be the other direction, ie. from the second data communication unit 26 to the first data communication unit 25.

It would however be possible to provide a separate primary electrode 11 and associated secondary electrode 12 only for data communication. In this case, power transfer and data communication were separated. For example, in Fig.2 one of the primary electrode 11 / secondary electrode 12 pair could be used for power transfer and the other for data communication. Or an additional primary electrode 11a on the stator 2 and an additional secondary electrode 12a on the shuttle Tn form an additional capacitor C_{PT}, used for data communication. This is exemplary indicating in Fig.5. The additional primary electrode 11a were connected to a first data communication unit 25 and the additional secondary electrode 12a to a second data communication 26. The additional primary electrode 11a and additional secondary electrode 12a for data communication were however arranged as described above for power transfer, namely such the additional air gap 13a in between were parallel to the motor air gap 6 and separated from the motor air gap 6 (without overlap).

## Claims

1. Linear motor having a stator (2) and at least one shuttle (Tn) movable along the stator (2) in a direction of movement (x), wherein drive magnets (3) are arranged along the stator (2) in direction of movement (x) and a number of drive coils (4) are arranged on the at least one shuttle (Tn), wherein the drive magnets (3) and the number of drive coils (4) face each other and are separated in a normal direction (z) by a motor air gap (6) with a motor air gap distance (L) in normal direction (z), wherein the motor air gap (6) extends in direction of movement (x) and in a transverse direction (y) that is normal on the direction of movement (x) and the normal direction (z), wherein a capacitive power transfer arrangement (10) is provided in the linear motor (1), the capacitive power transfer arrangement (10) comprising at least one primary electrode (11) arranged on the stator (2) and extending in direction of movement (x) and further comprising at least one secondary electrode (12) arranged on the shuttle (Tn), the at least one secondary electrode (12) facing the at least one primary electrode (11) and being arranged in normal direction (z) opposite the at least one primary electrode (11), wherein the at least one primary electrode (11) and the at least one secondary electrode (12) are separated in normal direction (z) by a power transfer air gap (13) with a power transfer air gap distance (T), wherein the power transfer air gap (13) extends in direction of movement (x) and in transverse direction (y), wherein the at least one primary electrode (11) and the at least one secondary electrode (12) form a power transfer capacitor (C_{PT}) with the power transfer air gap (13) as dielectric for capacitive power transfer for transferring electrical energy from the stator (2) to the shuttle (Tn), **characterised in that** the motor air gap (6) and the power transfer air gap (13) are parallel and are arranged in transverse direction (y) next to each other.

2. Linear motor according to claim 1, **characterised in that** at least one primary electrode (11) is arranged in transverse direction (y) on each side of the drive magnets (3) on the stator (2), **in that** at least one secondary electrode (12) is arranged in transverse direction (y) on each side of the drive coils (4) on the shuttle (Tn), **and in that** the at least one primary electrode (11) on each side is coupled to the at least one secondary electrode (12) on each side to form in each case a power transfer capacitor (C_{PT}).

3. Linear motor according to claim 1, **characterised in that** two primary electrodes (11) are arranged in transverse direction (y) on one side of the drive magnets (3) on the stator (2), **in that** two secondary electrodes (12) are arranged in transverse direction (y) on the same side than the primary electrodes (11), **and in that** each one of the primary electrodes (11) is coupled to one of the secondary electrodes (12) to form in each case a power transfer capacitor (C_{PT}).

4. Linear motor having a stator (2) and at least one shuttle (Tn) movable along the stator (2) in a direction of movement (x), wherein drive magnets (3) are arranged on the shuttle (Tn) and a number of drive coils (4) are arranged along the stator (2) in direction of movement (x), wherein the drive magnets (3) and the number of drive coils (4) face each other and are separated in a normal direction (z) by a motor air gap (6) with a motor air gap distance (L) in normal direction (z), wherein the motor air gap (6) extends in direction of movement (x) and in a transverse direction (y) that is normal on the direction of movement (x) and the normal direction (z), wherein a capacitive power transfer arrangement (10) is provided in the linear motor (1), the capacitive power transfer arrangement (10) comprising at least one primary electrode (11) arranged on the stator (2) and extending in direction of movement (x) and further comprising at least one secondary electrode (12) arranged on the shuttle (Tn), the at least one secondary electrode (12) facing the at least one primary electrode (11) and being arranged in normal direction (z) opposite the at least one primary electrode (11), wherein the at least one primary electrode (11) and the at least one secondary electrode (12) are separated in normal direction (z) by a power transfer air gap (13) with a power transfer air gap distance (T), wherein the power transfer air gap (13) extends in direction of movement (x) and in transverse direction (y), wherein the at least one primary electrode (11) and the at least one secondary electrode (12) form a power transfer capacitor (C_{PT}) with the power transfer air gap (13) as dielectric for capacitive power transfer for transferring electrical energy from the stator (2) to the shuttle (Tn), **characterised in that** the motor air gap (6) and the power transfer air gap (13) are parallel and are arranged in transverse direction (y) next to each other.

5. Linear motor according to claim 4, **characterised in that** at least one primary electrode (11) is arranged in transverse direction (y) on each side of the drive coils (4) on the stator (2), **in that** at least one secondary electrode (12) is arranged in transverse direction (y) on each side of the drive magnets (3) on the shuttle (Tn), **and in that** the at least one primary electrode (11) on each side is coupled to the at least one secondary electrode (12) on each side to form in each case a power transfer capacitor (C_{PT}).

6. Linear motor according to claim 4, **characterised in that** two primary electrodes (11) are arranged in transverse direction (y) on one side of the drive coils (4) on the stator (2), **in that** two secondary electrodes (12) are arranged in transverse direction (y) on the same side than the primary electrodes (11), **and in that** each one of the primary electrodes (11) is coupled to one of the secondary electrodes (12) to form in each case a power transfer capacitor (C_{PT}).

7. Linear motor according to claim 2 or 3 or according to claim 5 or 6, **characterised in that** both power transfer capacitors (C_{PT}) are used in the capacitive power transfer arrangement (10) for capacitive power transfer.

8. Linear motor according to claim 2 or 3 or according to claim 5 or 6, **characterised in that** a first one of the power transfer capacitors (C_{PT}) is used for capacitive power transfer and a second one of the power transfer capacitors (C_{PT}) is used for capacitive data communication between a first data communication unit (25) connected to the primary electrode (11) of second power transfer capacitor (C_{PT}) and a second data communication unit (26) connected to the secondary electrode (12) of the second power transfer capacitor (C_{PT}).

9. Linear motor according to one of claims 1 to 3 or according to one of claims 4 to 6, **characterised in that** an additional primary electrode (11a) is arranged on the stator (2) of the linear motor (1) and an additional secondary electrode (12a) is arranged on the at least one shuttle (Tn) of the linear motor (1), the additional primary electrode (11a) and additional secondary electrode (12a) forming an additional power transfer capacitor (C_{PTa}) that is used for capacitive data communication between a first data communication unit (25) connected to the additional primary electrode (11a) of the additional power transfer capacitor (C_{PTa}) and a second data communication unit (26) connected to the additional secondary electrode (12a) of the additional power transfer capacitor (C_{PTa}).

10. Linear motor according to claim 9, **characterised in that** the additional secondary electrode (12a) facing the additional primary electrode (11a) and being arranged in normal direction (z) opposite the additional primary electrode (11a), wherein the additional primary electrode (11a) and the additional secondary electrode (12a) are separated by an additional air gap (13a) with an additional air gap distance in normal direction (z), wherein the additional air gap (13a) extends in direction of movement (x) and in transverse direction (y), wherein the additional primary electrode (11a) and the additional secondary electrode (12a) form the additional capacitor (C_{PTa}) with the additional air gap (13a) as dielectric and wherein the motor air gap (6) and the additional air gap (13a) are parallel and are arranged in transverse direction (y) next to each other.

11. Linear motor according to one of claims 1 to 3 or according to one of claims 4 to 6, **characterised in that** the linear motor additionally comprises a first data communication unit (25) connected to the at least one primary electrode (11) of the power transfer capacitor (C_{PT}) and a second data communication unit (26) connected to the at least one secondary electrode (12) of the power transfer capacitor (C_{PT}), wherein the power transfer capacitor (C_{PT}) formed by at least one primary electrode (11) and the associated at least one secondary electrode (12) is additionally be used for capacitive power transfer between the first data communication unit (25) and the second data communication unit (26).

12. Linear motor with a capacitive power transfer arrangement (10) as claimed in one of claims 1 to 11 provided in normal direction (z) on both sides of the at least one shuttle (Tn) and with a stator (2) provided in normal direction (z) on both sides of the at least one shuttle (Tn).

13. Linear motor according to one of claims 1 to 12, **characterised in that** the stator (2) comprises at least one bend in which the stator (2) is bent around the normal direction (z).

14. Linear motor according to one of claims 1 to 12, **characterised in that** the stator (2) comprises at least one bend in which the stator (2) is bent around the transverse direction (y).

## Patentansprüche

1. Linearmotor mit einem Stator (2) und mindestens einem Shuttle (Tn), das entlang des Stators (2) in einer Bewegungsrichtung (x) bewegbar ist, wobei Antriebsmagnete (3) in Bewegungsrichtung (x) entlang des Stators (2) angeordnet sind und eine Anzahl von Antriebsspulen (4) an dem mindestens einen Shuttle (Tn) angeordnet ist, wobei die Antriebsmagnete (3) und die Anzahl von Antriebsspulen (4) einander zugewandt sind und in einer Normalrichtung (z) durch einen Motorluftspalt (6) mit einem Motorluftspaltabstand (L) in Normalrichtung (z) getrennt sind, wobei sich der Motorluftspalt (6) in Bewegungsrichtung (x) und in einer Querrichtung (y) erstreckt, die normal zu der Bewegungsrichtung (x) und der Normalrichtung (z) ist, wobei in dem Linearmotor (1) eine kapazitive Energieübertragungsanordnung (10) vorgesehen ist, wobei die kapazitive Energieübertragungsanordnung (10) mindestens eine an dem Stator (2) angeordnete und sich in Bewegungsrichtung (x) erstreckende Primärelektrode (11) umfasst und ferner mindestens eine an dem Shuttle (Tn) angeordnete Sekundärelektrode (12) umfasst, wobei die mindestens eine Sekundärelektrode (12) der mindestens einen Primärelektrode (11) zugewandt ist und in Normalrichtung (z) gegenüber der mindestens einen Primärelektrode (11) angeordnet ist, wobei die mindestens eine Primärelektrode (11) und die mindestens eine Sekundärelektrode (12) in Normalrichtung (z) durch einen Energieübertragungsluftspalt (13) mit einem Energieübertragungsluftspaltabstand (T) getrennt sind, wobei sich der Energieübertragungsluftspalt (13) in Bewegungsrichtung (x) und in Querrichtung (y) erstreckt, wobei die mindestens eine Primärelektrode (11) und die mindestens eine Sekundärelektrode (12) einen Energieübertragungskondensator (C_{PT}) mit dem Energieübertragungsluftspalt (13) als Dielektrikum zur kapazitiven Energieübertragung zum Übertragen elektrischer Energie von dem Stator (2) auf das Shuttle (Tn) bilden, **dadurch gekennzeichnet, dass** der Motorluftspalt (6) und der Energieübertragungsluftspalt (13) parallel sind und in Querrichtung (y) nebeneinander angeordnet sind.

2. Linearmotor nach Anspruch 1, **dadurch gekennzeichnet, dass** mindestens eine Primärelektrode (11) in Querrichtung (y) auf jeder Seite der Antriebsmagnete (3) an dem Stator (2) angeordnet ist, **dass** mindestens eine Sekundärelektrode (12) in Querrichtung (y) auf jeder Seite der Antriebsspulen (4) an dem Shuttle (Tn) angeordnet ist, **und dass** die mindestens eine Primärelektrode (11) auf jeder Seite mit der mindestens einen Sekundärelektrode (12) auf jeder Seite gekoppelt ist, um jeweils einen Energieübertragungskondensator (C_{PT}) zu bilden.

3. Linearmotor nach Anspruch 1, **dadurch gekennzeichnet, dass** zwei Primärelektroden (11) in Querrichtung (y) auf einer Seite der Antriebsmagnete (3) an dem Stator (2) angeordnet sind, **dass** zwei Sekundärelektroden (12) in Querrichtung (y) auf derselben Seite wie die Primärelektroden (11) angeordnet sind, **und dass** jede der Primärelektroden (11) mit einer der Sekundärelektroden (12) gekoppelt ist, um jeweils einen Energieübertragungskondensator (C_{PT}) zu bilden.

4. Linearmotor mit einem Stator (2) und mindestens einem Shuttle (Tn), das entlang des Stators (2) in einer Bewegungsrichtung (x) bewegbar ist, wobei Antriebsmagnete (3) an dem Shuttle (Tn) angeordnet sind und eine Anzahl von Antriebsspulen (4) in Bewegungsrichtung (x) entlang des Stators (2) angeordnet ist, wobei die Antriebsmagnete (3) und die Anzahl von Antriebsspulen (4) einander zugewandt sind und in einer Normalrichtung (z) durch einen Motorluftspalt (6) mit einem Motorluftspaltabstand (L) in Normalrichtung (z) getrennt sind, wobei sich der Motorluftspalt (6) in Bewegungsrichtung (x) und in einer Querrichtung (y) erstreckt, die normal zu der Bewegungsrichtung (x) und der Normalrichtung (z) ist, wobei in dem Linearmotor (1) eine kapazitive Energieübertragungsanordnung (10) vorgesehen ist, wobei die kapazitive Energieübertragungsanordnung (10) mindestens eine an dem Stator (2) angeordnete und sich in Bewegungsrichtung (x) erstreckende Primärelektrode (11) umfasst und ferner mindestens eine an dem Shuttle (Tn) angeordnete Sekundärelektrode (12) umfasst, wobei die mindestens eine Sekundärelektrode (12) der mindestens einen Primärelektrode (11) zugewandt ist und in Normalrichtung (z) gegenüber der mindestens einen Primärelektrode (11) angeordnet ist, wobei die mindestens eine Primärelektrode (11) und die mindestens eine Sekundärelektrode (12) in Normalrichtung (z) durch einen Energieübertragungsluftspalt (13) mit einem Energieübertragungsluftspaltabstand (T) getrennt sind, wobei sich der Energieübertragungsluftspalt (13) in Bewegungsrichtung (x) und in Querrichtung (y) erstreckt, wobei die mindestens eine Primärelektrode (11) und die mindestens eine Sekundärelektrode (12) einen Energieübertragungskondensator (C_{PT}) mit dem Energieübertragungsluftspalt (13) als Dielektrikum zur kapazitiven Energieübertragung zum Übertragen elektrischer Energie von dem Stator (2) auf das Shuttle (Tn) bilden, **dadurch gekennzeichnet, dass** der Motorluftspalt (6) und der Energieübertragungsluftspalt (13) parallel sind und in Querrichtung (y) nebeneinander angeordnet sind.

5. Linearmotor nach Anspruch 4, **dadurch gekennzeichnet, dass** mindestens eine Primärelektrode (11) in Querrichtung (y) auf jeder Seite der Antriebsspulen (4) an dem Stator (2) angeordnet ist, **dass** mindestens eine Sekundärelektrode (12) in Querrichtung (y) auf jeder Seite der Antriebsmagnete (3) an dem Shuttle (Tn) angeordnet ist, **und dass** die mindestens eine Primärelektrode (11) auf jeder Seite mit der mindestens einen Sekundärelektrode (12) auf jeder Seite gekoppelt ist, um jeweils einen Energieübertragungskondensator (C_{PT}) zu bilden.

6. Linearmotor nach Anspruch 4, **dadurch gekennzeichnet, dass** zwei Primärelektroden (11) in Querrichtung (y) auf einer Seite der Antriebsspulen (4) an dem Stator (2) angeordnet sind, **dass** zwei Sekundärelektroden (12) in Querrichtung (y) auf derselben Seite wie die Primärelektroden (11) angeordnet sind, **und dass** jede der Primärelektroden (11) mit einer der Sekundärelektroden (12) gekoppelt ist, um jeweils einen Energieübertragungskondensator (C_{PT}) zu bilden.

7. Linearmotor nach Anspruch 2 oder 3 oder nach Anspruch 5 oder 6, **dadurch gekennzeichnet, dass** beide Energieübertragungskondensatoren (C_{PT}) in der kapazitiven Energieübertragungsanordnung (10) zur kapazitiven Energieübertragung verwendet werden.

8. Linearmotor nach Anspruch 2 oder 3 oder nach Anspruch 5 oder 6, **dadurch gekennzeichnet, dass** ein erster der Energieübertragungskondensatoren (C_{PT}) zur kapazitiven Energieübertragung verwendet wird und ein zweiter der Energieübertragungskondensatoren (C_{PT}) zur kapazitiven Datenkommunikation zwischen einer ersten Datenkommunikationseinheit (25), die mit der Primärelektrode (11) des zweiten Energieübertragungskondensators (C_{PT}) verbunden ist, und einer zweiten Datenkommunikationseinheit (26), die mit der Sekundärelektrode (12) des zweiten Energieübertragungskondensators (C_{PT}) verbunden ist, verwendet wird.

9. Linearmotor nach einem der Ansprüche 1 bis 3 oder nach einem der Ansprüche 4 bis 6, **dadurch gekennzeichnet, dass** eine zusätzliche Primärelektrode (11a) an dem Stator (2) des Linearmotors (1) angeordnet ist und eine zusätzliche Sekundärelektrode (12a) an dem mindestens einen Shuttle (Tn) des Linearmotors (1) angeordnet ist, wobei die zusätzliche Primärelektrode (11a) und die zusätzliche Sekundärelektrode (12a) einen zusätzlichen Energieübertragungskondensator (C_{PTa}) bilden, der zur kapazitiven Datenkommunikation zwischen einer ersten Datenkommunikationseinheit (25), die mit der zusätzlichen Primärelektrode (11a) des zusätzlichen Energieübertragungskondensators (C_{PTa}) verbunden ist, und einer zweiten Datenkommunikationseinheit (26), die mit der zusätzlichen Sekundärelektrode (12a) des zusätzlichen Energieübertragungskondensators (C_{PTa}) verbunden ist, verwendet wird.

10. Linearmotor nach Anspruch 9, **dadurch gekennzeichnet, dass** die zusätzliche Sekundärelektrode (12a) der zusätzlichen Primärelektrode (11a) zugewandt ist und in Normalrichtung (z) gegenüber der zusätzlichen Primärelektrode (11a) angeordnet ist, wobei die zusätzliche Primärelektrode (11a) und die zusätzliche Sekundärelektrode (12a) durch einen zusätzlichen Luftspalt (13a) mit einem zusätzlichen Luftspaltabstand in Normalrichtung (z) getrennt sind, wobei sich der zusätzliche Luftspalt (13a) in Bewegungsrichtung (x) und in Querrichtung (y) erstreckt, wobei die zusätzliche Primärelektrode (11a) und die zusätzliche Sekundärelektrode (12a) den zusätzlichen Kondensator (C_{PTa}) mit dem zusätzlichen Luftspalt (13a) als Dielektrikum bilden und wobei der Motorluftspalt (6) und der zusätzliche Luftspalt (13a) parallel sind und in Querrichtung (y) nebeneinander angeordnet sind.

11. Linearmotor nach einem der Ansprüche 1 bis 3 oder nach einem der Ansprüche 4 bis 6, **dadurch gekennzeichnet, dass** der Linearmotor ferner eine erste Datenkommunikationseinheit (25), die mit der mindestens einen Primärelektrode (11) des Energieübertragungskondensators (C_{PT}) verbunden ist, und eine zweite Datenkommunikationseinheit (26), die mit der mindestens einen Sekundärelektrode (12) des Energieübertragungskondensators (C_{PT}) verbunden ist, umfasst, wobei der durch mindestens eine Primärelektrode (11) und die zugeordnete mindestens eine Sekundärelektrode (12) gebildete Energieübertragungskondensator (C_{PT}) zusätzlich zur kapazitiven Datenkommunikation zwischen der ersten Datenkommunikationseinheit (25) und der zweiten Datenkommunikationseinheit (26) verwendet wird.

12. Linearmotor mit einer kapazitiven Energieübertragungsanordnung (10) nach einem der Ansprüche 1 bis 11, die in Normalrichtung (z) auf beiden Seiten des mindestens einen Shuttles (Tn) vorgesehen ist, und mit einem Stator (2), der in Normalrichtung (z) auf beiden Seiten des mindestens einen Shuttles (Tn) vorgesehen ist.

13. Linearmotor nach einem der Ansprüche 1 bis 12, **dadurch gekennzeichnet, dass** der Stator (2) mindestens eine Biegung umfasst, in der der Stator (2) um die Normalrichtung (z) gebogen ist.

14. Linearmotor nach einem der Ansprüche 1 bis 12, **dadurch gekennzeichnet, dass** der Stator (2) mindestens eine Biegung umfasst, in der der Stator (2) um die Querrichtung (y) gebogen ist.

## Revendications

1. Moteur linéaire ayant un stator (2) et au moins une navette (Tn) mobile le long du stator (2) dans une direction de déplacement (x), dans lequel des aimants d'entraînement (3) sont disposés le long du stator (2) dans la direction de déplacement (x) et plusieurs bobines d'entraînement (4) sont disposées sur la ou les navettes (Tn), dans lequel les aimants d'entraînement (3) et les bobines d'entraînement (4) se font face et sont séparés dans une direction normale (z) par un entrefer de moteur (6) à une distance d'entrefer de moteur (L) dans la direction normale (z), dans lequel l'entrefer de moteur (6) s'étend dans la direction de déplacement (x) et dans une direction transversale (y) normale à la direction de déplacement (x) et à la direction normale (z), dans lequel un agencement de transfert de puissance capacitif (10) est prévu dans le moteur linéaire (1), l'agencement de transfert de puissance capacitif (10) comprenant au moins une électrode primaire (11) disposée sur le stator (2) et s'étendant dans la direction de déplacement (x) et comprenant en outre au moins une électrode secondaire (12) disposée sur la navette (Tn), la ou les électrodes secondaires (12) faisant face à la ou aux électrodes primaires (11) et étant disposées dans la direction normale (z) à l'opposé de la ou des électrodes primaires (11), dans lequel la ou les électrodes primaires (11) et la ou les électrodes secondaires (12) sont séparées dans la direction normale (z) par un entrefer de transfert de puissance (13) à une distance d'entrefer de transfert de puissance (T), dans lequel l'entrefer de transfert de puissance (13) s'étend dans la direction de déplacement (x) et dans la direction transversale (y), dans lequel la ou les électrodes primaires (11) et la ou les électrodes secondaires (12) forment un condensateur de transfert de puissance (C_{PT}) avec l'entrefer de transfert de puissance (13) en tant que diélectrique pour le transfert de puissance capacitif pour transférer l'énergie électrique du stator (2) à la navette (Tn), **caractérisé en ce que** l'entrefer de moteur (6) et l'entrefer de transfert de puissance (13) sont parallèles et sont disposés dans la direction transversale (y) l'un à côté de l'autre.

2. Moteur linéaire selon la revendication 1, **caractérisé en ce qu'**au moins une électrode primaire (11) est disposée dans la direction transversale (y) de chaque côté des aimants d'entraînement (3) sur le stator (2), **en ce qu'**au moins une électrode secondaire (12) est disposée dans la direction transversale (y) de chaque côté des bobines d'entraînement (4) sur la navette (Tn), et **en ce que** la ou les électrodes primaires (11) de chaque côté sont couplées à la ou aux électrodes secondaires (12) de chaque côté pour former respectivement un condensateur de transfert de puissance (C_{PT}).

3. Moteur linéaire selon la revendication 1, **caractérisé en ce que** deux électrodes primaires (11) sont disposées dans la direction transversale (y) sur un côté des aimants d'entraînement (3) sur le stator (2), **en ce que** deux électrodes secondaires (12) sont disposées dans la direction transversale (y) du même côté que les électrodes primaires (11), et **en ce que** chacune des électrodes primaires (11) est couplée à l'une des électrodes secondaires (12) pour former respectivement un condensateur de transfert de puissance (C_{PT}).

4. Moteur linéaire ayant un stator (2) et au moins une navette (Tn) mobile le long du stator (2) dans une direction de déplacement (x), dans lequel des aimants d'entraînement (3) sont disposés sur la navette (Tn) et plusieurs bobines d'entraînement (4) sont disposées le long du stator (2) dans la direction de déplacement (x), dans lequel les aimants d'entraînement (3) et les bobines d'entraînement (4) se font face et sont séparés dans une direction normale (z) par un entrefer de moteur (6) à une distance d'entrefer de moteur (L) dans la direction normale (z), l'entrefer de moteur (6) s'étendant dans la direction de déplacement (x) et dans une direction transversale (y) normale à la direction de déplacement (x) et à la direction normale (z), dans lequel un agencement de transfert de puissance capacitif (10) est prévu dans le moteur linéaire (1), l'agencement de transfert de puissance capacitif (10) comprenant au moins une électrode primaire (11) disposée sur le stator (2) et s'étendant dans la direction de déplacement (x) et comprenant en outre au moins une électrode secondaire (12) disposée sur la navette (Tn), la ou les électrodes secondaires (12) faisant face à la ou aux électrodes primaires (11) et étant disposées dans la direction normale (z) à l'opposé de la ou des électrodes primaires (11), dans lequel la ou les électrodes primaires (11) et la ou les électrodes secondaires (12) sont séparées dans la direction normale (z) par un entrefer de transfert de puissance (13) à une distance d'entrefer de transfert de puissance (T), dans lequel l'entrefer de transfert de puissance (13) s'étend dans la direction de déplacement (x) et dans la direction transversale (y), dans lequel la ou les électrodes primaires (11) et la ou les électrodes secondaires (12) forment un condensateur de transfert de puissance (C_{PT}) avec l'entrefer de transfert de puissance (13) en tant que diélectrique pour le transfert de puissance capacitif pour transférer l'énergie électrique du stator (2) à la navette (Tn), **caractérisé en ce que** l'entrefer de moteur (6) et l'entrefer de transfert de puissance (13) sont parallèles et sont disposés dans la direction transversale (y) l'un à côté de l'autre.

5. Moteur linéaire selon la revendication 4, **caractérisé en ce qu'**au moins une électrode primaire (11) est disposée dans la direction transversale (y) de chaque côté des bobines d'entraînement (3) sur le stator (2), **en ce qu'**au moins une électrode secondaire (12) est disposée dans la direction transversale (y) de chaque côté des aimants d'entraînement (4) sur la navette (Tn), et **en ce que** la ou les électrodes primaires (11) de chaque côté sont couplées à la ou aux électrodes secondaires (12) de chaque côté pour former respectivement un condensateur de transfert de puissance (C_{PT}).

6. Moteur linéaire selon la revendication 4, **caractérisé en ce que** deux électrodes primaires (11) sont disposées dans la direction transversale (y) sur un côté des bobines d'entraînement (4) sur le stator (2), **en ce que** deux électrodes secondaires (12) sont disposées dans la direction transversale (y) du même côté que les électrodes primaires (11), et **en ce que** chacune des électrodes primaires (11) est couplée à l'une des électrodes secondaires (12) pour former respectivement un condensateur de transfert de puissance (C_{PT}).

7. Moteur linéaire selon la revendication 2 ou 3 ou selon la revendication 5 ou 6, **caractérisé en ce que** les deux condensateurs de transfert de puissance (C_{PT}) sont utilisés dans l'agencement de transfert de puissance capacitif (10) pour le transfert de puissance capacitif.

8. Moteur linéaire selon la revendication 2 ou 3 ou selon la revendication 5 ou 6, **caractérisé en ce qu'**un premier des condensateurs de transfert de puissance (C_{PT}) est utilisé pour le transfert de puissance capacitif et un second des condensateurs de transfert de puissance (C_{PT}) est utilisé pour la communication capacitive de données entre une première unité de communication de données (25) connectée à l'électrode primaire (11) du second condensateur de transfert de puissance (C_{PT}) et une seconde unité de communication de données (26) connectée à l'électrode secondaire (12) du second condensateur de transfert de puissance (C_{PT}).

9. Moteur linéaire selon l'une des revendications 1 à 3 ou selon l'une des revendications 4 à 6, **caractérisé en ce qu'**une électrode primaire supplémentaire (11a) est disposée sur le stator (2) du moteur linéaire (1) et une électrode secondaire supplémentaire (12a) est disposée sur au moins une navette (Tn) du moteur linéaire (1), l'électrode primaire supplémentaire (11a) et l'électrode secondaire supplémentaire (12a) formant un condensateur de transfert de puissance supplémentaire (C_{PTa}) qui est utilisé pour la communication capacitive de données entre une première unité de communication de données (25) connectée à l'électrode primaire supplémentaire (11a) du condensateur de transfert de puissance supplémentaire (C_{PTa}) et une seconde unité de communication de données (26) connectée à l'électrode secondaire supplémentaire (12a) du condensateur de transfert de puissance supplémentaire (C_{PTa}).

10. Moteur linéaire selon la revendication 9, **caractérisé en ce que** l'électrode secondaire supplémentaire (12a) fait face à l'électrode primaire supplémentaire (11a) et est disposée dans la direction normale (z) à l'opposé de l'électrode primaire supplémentaire (11a), l'électrode primaire supplémentaire (11a) et l'électrode secondaire supplémentaire (12a) étant séparées par un entrefer supplémentaire (13a) à une distance d'entrefer supplémentaire dans la direction normale (z), l'entrefer supplémentaire (13a) s'étendant dans la direction de déplacement (x) et dans la direction transversale (y), dans lequel l'électrode primaire supplémentaire (11a) et l'électrode secondaire supplémentaire (12a) forment le condensateur supplémentaire (C_{PTa}) avec l'entrefer supplémentaire (13a) en tant que diélectrique, et dans lequel l'entrefer de moteur (6) et l'entrefer supplémentaire (13a) sont parallèles et sont disposés dans la direction transversale (y) l'un à côté de l'autre.

11. Moteur linéaire selon l'une des revendications 1 à 3 ou selon l'une des revendications 4 à 6, **caractérisé en ce que** le moteur linéaire comprend en outre une première unité de communication de données (25) connectée à la ou aux électrodes primaires (11) du condensateur de transfert de puissance (C_{PT}) et une seconde unité de communication de données (26) connectée à la ou aux électrodes secondaires (12) du condensateur de transfert de puissance (C_{PT}), dans lequel le condensateur de transfert de puissance (C_{PT}) formé par au moins une électrode primaire (11) et l'au moins une électrode secondaire (12) associée est en outre utilisé pour un transfert de puissance capacitif entre la première unité de communication de données (25) et la seconde unité de communication de données (26).

12. Moteur linéaire comprenant un dispositif de transfert de puissance capacitif (10) selon l'une des revendications 1 à 11, prévu dans la direction normale (z) des deux côtés de la ou des navettes (Tn) et un stator (2) prévu dans la direction normale (z) des deux côtés de la ou des navettes (Tn).

13. Moteur linéaire selon l'une des revendications 1 à 12, **caractérisé en ce que** le stator (2) présente au moins un coude dans lequel le stator (2) est courbé autour de la direction normale (z).

14. Moteur linéaire selon l'une des revendications 1 à 12, **caractérisé en ce que** le stator (2) présente au moins un coude dans lequel le stator (2) est courbé autour de la direction transversale (y).
